# EUROPEAN PATENT APPLICATION

(11) **EP 0 540 238 A1**
(43) Date of publication of application: **05.05.1993**
(21) Application number: 92309619.2
(22) Date of filing: 21.10.1992
(51) Int. Cl.: G02B 6/02, G02B 23/16

(54) **Method and device for the vacuum cleaning of fiber**

(30) Priority: 31.10.1991 US 785629
(71) Applicant: AT&T Corp., New York, NY 10013-2412 (US)
(72) Inventor: Moss, Parry A., Stone Mountain, Gerogia 30087 (US)
(74) Representative: Johnston, Kenneth Graham

(57) **Abstract**

A vacuum cleaning device (20) which is capable of being used in-line as part of existing optical fiber processing paths. The device includes a rear plate (22) and a front plate (24) positioned adjacent to each other. Each of the plates (22 and 24) include at least one beveled edge with the plates being aligned such that their respective beveled edges create a V-shaped groove or trough (26). During operation, the device is aligned relative to the fiber processing path such that the fiber travels parallel to the device. Furthermore, a plurality of slots (36) are evenly spaced along the trough (26) to provide widened areas of increased air flow around the fiber. In addition, the front plate (24) includes means for directing a vacuum from a source to the trough (26) in order to generate a vacuum pressure around the fiber while the fiber is being passed through the vacuum cleaning device. The applied vacuum pressure acts to remove loose debris, as well as residue from cleaning solutions which may have been used, from the surface of the fiber.

## Description

### Technical Field

This invention relates to a method and device for vacuum cleaning fiber.

### Background of the Invention

For various reasons, it may be desirable to remove or strip the buffer material from a coated optical fiber. One such reason that could prompt the desire to remove the buffer material from a portion of the fiber would be the preparation of one end of the fiber for connectorization. It has been found to be particularly difficult to expose a substantial length of the optical fiber for certain types of connectorization arrangements.

Presently, when it is desired to remove the buffer layer, a stripping tool including opposed knife blades is manipulated to cause the blade to cut through the buffer layer. Afterwards, forces are applied to the tool to cause the buffer layer to be pulled from the optical fiber. However, because of the strength of the adhesion between the buffer layer and the coating material, the forces required to remove the buffer layer may cause the fiber to break, particularly when trying to remove only about one inch of the buffer layer to expose sufficient optical fiber for termination purposes.

In an attempt to overcome the problems identified above, at least one interface system has been developed to modify the adhesion continually used between the buffer material and the fiber to allow easier removal of the buffer material once so desired. The interface system disclosed in U.S. Patent No. 5,011,260 describes a plastic decoupling buffering material which has controlled coupling to at least the outer layer of coating material surrounding the optical fiber. As such, the plastic decoupling buffering material is maintained between the other buffering material and the optical fiber during normal use but may be removed along with the other buffering material upon the proper application of relatively low stripping forces.

Even though the interface system mentioned above makes a number of positive contributions to overcoming the existing problems regarding buffer layer stripping, the system has its shortcomings. Most notably, the interface system requires that the fiber to which the decoupling material is going to be administered be very clean, dust free and dry. If the fiber has not been adequately cleaned, there is a high probability that the material will not be applied uniformly or that an applicator die for the decoupling material may be clogged by loose particles.

At present, the fiber is cleaned by passing it through an alcohol wash. Various methods have been used in attempts to adequately remove the alcohol and debris from the fiber surface, including air wipes, felts, rags and other similar products. However, none of these cleaning products removed enough of the alcohol and associated debris from the fiber. Therefore, such products often left an oily film along the surface of the fiber, which greatly interfered with the proper application of the decoupling material.

In light of the above-identified problems with the present technology, what is needed and what seemingly is not provided by the prior art is a dependable system capable of completely removing the alcohol, or residue from other cleaning solution, and other loose debris from the fiber. Still further, the sought-after cleaning method should not contribute undue forces to the fiber, such as the drag forces introduced by the felts and rags which must make physical contact with the fiber in order to remove any debris or ibrational forces introduced by air wipes. Furthermore, the sought-after cleaning system should be energy efficient, unlike air knife systems which not only use a great deal of energy but also generate a tremendous amount of noise during operation.

### Summary of the Invention

The foregoing problems of the prior art have been overcome with the vacuum cleaning system as set forth in Claim 1.

### Brief Description of the Drawing

FIG. 1 is a perspective view of a vacuum cleaning chuck in accordance with the preferred embodiment of the present invention;
FIG. 2 is a top view of a vacuum cleaning chuck in accordance with the preferred embodiment of the present invention; and
FIG. 3 is an end cross sectional view of a vacuum cleaning chuck in accordance with the preferred embodiment of the present invention.

### Detailed Description

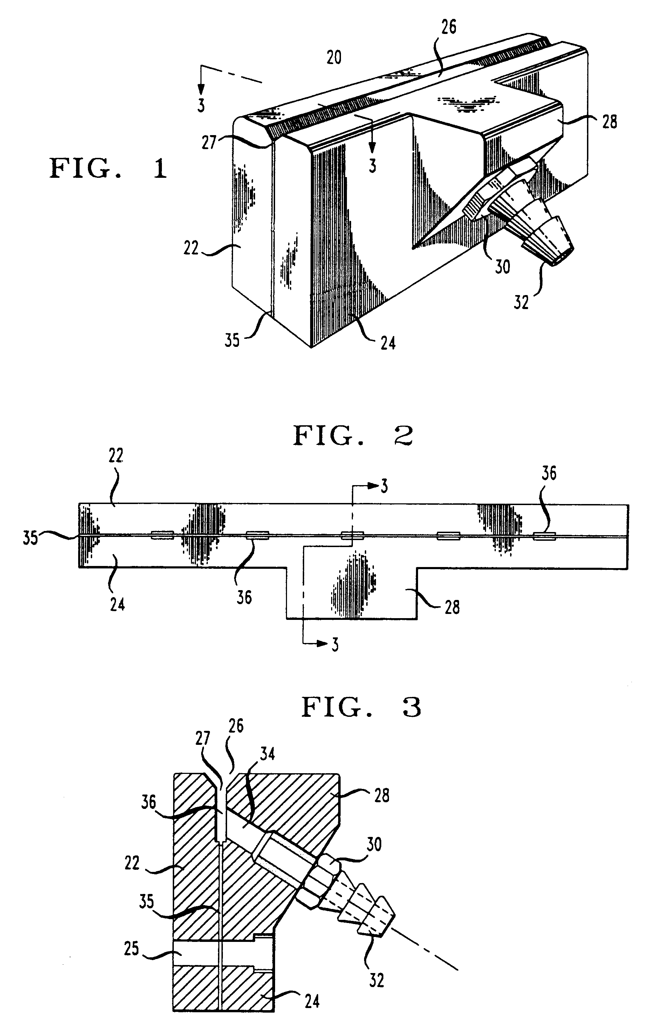

Referring now to Figure 1, there is shown a vacuum cleaning chuck in accordance with the preferred embodiment of the present invention. The vacuum cleaning chuck is designated generally by the numeral 20. The vacuum cleaning chuck 20 is constructed substantially of two rectangular plates 22 and 24 positioned in abutment to each other in an orientation as shown in FIG. 1. For convenience of reference, the two plates will be continually distinguished herein by referring to a rear plate 22 and a front plate 24.

The two plates, rear plate 22 and front plate 24, are constructed such that one corner along the entire length of each plate is removed, thereby creating a beveled edge for each plate. The two plates 22 and 24 are then positioned adjacent to one another to allow a beveled edge of rear plate 22 to be aligned with a beveled edge of front plate 24. The two plates may be held together using any well known method of securing plates, such as fastening means 25, shown in FIG.3. The alignment of the respective beveled edges creates a V-shaped trough 26 with a lowest point or nadir 27, as depicted in FIG. 1, and even more clearly shown in FIG. 3.

In the preferred embodiment of the present invention, the vacuum cleaning chuck 20 may be incorporated into various points throughout the processing of the fiber cable. However regardless of its longitudinal position along the fiber processing path, during operation, the vacuum cleaning chuck 20 is located near the path of travel of the fiber so as to define a particular longitudinal zone of cleaning along the fiber processing path. In addition, the vacuum cleaning chuck is aligned relative to the fiber processing path such that the trough 26 acts as a physical support for the particular portion of fiber located in the cleaning zone. As stated earlier, the cleaning zone is established by the length of the vacuum cleaning chuck 20.

The front plate 24 is constructed in such a manner to provide a means of fluid communication between the trough 26 and a source of vacuum pressure (not shown). The vacuum pressure may be generated by any well known method, such as simply providing an individual vacuum pump for each cleaning chuck desired along the fiber processing path. In the present embodiment of this invention, the front plate 24 is adapted with a triangular shaped protrusion 28 which extends from the upper end of front plate 24 near the trough 26 and the path of the fiber travel. The protrusion 28 provides the front plate 24 with the support structure for attaching a selected means of directing the vacuum pressure to the trough 26. Specifically, a hose bib fitting 30 is secured to the front plate 24 via the protrusion 28.

The hose bib fitting 30 provides an open air passage from an outward end 32 of the hose bib fitting to an air bellow or chamber 34 as shown in FIG. 3. The air chamber 34 is a relatively shallow indentation in the side on the front plate 24, positioned adjacent to the rear plate 22. Preferably, the air chamber 34 should extend substantially the entire length of plates 22 and 24 and be located near the upper side of the plates near their aligned beveled edges. Therefore, the construction of the front plate 24 in accordance with the present invention provides fluid communication to the air chamber 34 located on the inward side of front plate 24 from a remotely located vacuum pump (not shown) through the front plate 24.

To further assist in providing an air passage through the front plate to the trough 26, a very thin shim plate 35 is preferably positioned between the rear plate 22 and the front plate 24. The shim plate 35 should cover only the lower and side portions of each plate 22 and 24 so as to not cover the air chamber 34, which, as stated earlier, is located on the upper portion of the inward side of front plate 24, as shown in FIG. 3. By being oriented in the above-stated fashion, a slight gap is created between the upper portions of rear plate 22 and front plate 24, while maintaining a secure and air-tight abutment between the lower and side portions of the plates 22 and 24. Therefore, if a vacuum pressure is applied to air chamber 34, when the vacuum cleaning chuck is properly aligned near a cable, the cable will be drawn toward the nadir 27 of trough 26.

It should be noted that the thickness of the shim plate and thus the gap created between the plates 22 and 24 should be less than the diameter of the fiber to be cleaned. Therefore, when a vacuum pressure is applied to the cleaning area, the fiber is not pulled down into or through the gap, but is supported by the beveled edges at the bottom of the trough 26. In the preferred embodiment of the present invention, the shim plate has a thickness of approximately 2 mils or 0.002 inches.

To further facilitate the use of the vacuum cleaning chuck of the present invention to remove debris and cleaning solution residue from fiber, a series of downwardly extending slots 36 is provided immediately below the trough 26. A depicted in FIGS. 2 and 3, the slots 36 are aligned such that along their depth, the slots extend perpendicular to the trough 26 and the flow of fiber and provide a series of widened passages for air flow between the trough 26 and air chamber 34. The slots 36 extend from the bottom of trough 26 to point at least as low as the air chamber 34, but do not extend trough the entire height of the vacuum cleaning chuck 20.

Preferably, the slots 36 are evenly spaced throughout the cleaning zone established by the length of the vacuum cleaning chuck 20. However, the combined length of the slots 36 along the tiber path should not exceed approximately one-half (½) the entire length of the cleaning zone as established by the length of the cleaning chuck 20. A substantial amount of the length of the vacuum cleaning chuck must remain uneffected by the slots 36 in order to maintain enough structure at the nadir 27 of the trough 26 to provide adequate physical support to the fiber while a vacuum pressure is being applied. If the slots 36 are too long then the vacuum pressure causes the fiber to bend down into the individual slots thereby causing the edges of the slots 36 to damage the fiber.

Furthermore, the width of each slot 36 should be only slightly larger than the diameter of the fiber to be cleaned. By having the width of each slot 36 slightly larger than the fiber diameter, then when a vacuum is drawn across the fiber, a substantial amount of air circulates around the entire circumference of the fiber. Therefore, even though the gap is narrower than the diameter of the fiber, as stated earlier, residue from particles or various cleaning solutions used may be fully removed from all sides of the fiber as it passes longitudinally across the slots 36.

In the preferred embodiment of the present invention, the overall length of the vacuum cleaning chuck 20 is approximately three (3) inches. In addition, the slots 36 are disposed on one-half (½) inch centers, with each slot having a length of approximately 0.150-0.180 inches. With specific regard to the width of the slots 36, the most appropriate width found to date is one and one-half (1½) times the diameter of the fiber being cleaned. The particular arrangement of the slots can be clearly seen in FIG. 2.

The concepts of the present invention may be incorporated at a number of different places throughout the fiber processing. At present, the preferred application of this vacuum cleaning chuck is immediately following the fiber being run through an alcohol wash. The vacuum cleaning chuck has been tested and found to be very effective and efficient at removing not only loose particles which may be attached to the fiber, but also removes essentially all of the residue remaining on the fiber due to the alcohol wash.

It should be noted, however, that by varying the width of each slot 36 and/or the specific amount of pressure applied, a series of cleaning chucks with varying physical characteristics may be employed to provide ranges of course to fine cleaning along the fiber processing path. For example, a cleaning chuck with large slots and relatively high vacuum pressure may be used during the initial processing stages to remove larger particles of dirt which may have collected on the fiber during possible long term storage in an inclimate environment. However, on the other hand, once into a more sensitive stage of fiber processing, such as immediately after the application of a delicate coating, it may be desirable to use a cleaning chuck with smaller width and apply less pressure in order to limit the external forces applied to the fiber while cleaning.

The particular preferred embodiment presented herein also refers to only one cleaning chuck being positioned along a specific circumferential area of the fiber. However, it may be beneficial to arrange two of the cleaning chucks in a perpendicular configuration about the same portion of the travel path of the fiber to ensure that all residue is removed from the fiber surface. In the alternative, a plurality of cleaning chucks may be arranged in tandem.

## Claims

1. A device for cleaning fiber while the fiber travels along a processing path, said device being characterized by:
a fiber support structure which defines a longitudinal zone of cleaning along the path of travel of the fiber and provides physical support for the particular portion of fiber located in the established cleaning zone; and
vacuum means in fluid communication with the established cleaning zone for drawing a controllable vacuum across the portion of fiber located within the cleaning zone to remove excess particles from the fiber surface.

2. The fiber cleaning device of claim 1 wherein the fiber support structure further comprises a groove oriented parallel to the fiber path of travel such that when a vacuum is drawn through the vacuum means the fiber travels along the nadir of the groove.

3. The fiber cleaning device of claim 2 wherein the groove within the fiber support structure is V-shaped.

4. The fiber cleaning device of claim 2 wherein the vacuum means is positioned along the nadir of the groove which supports the fiber.

5. The fiber cleaning device of claim 2 wherein the vacuum means includes a plurality of slots.

6. The fiber cleaning device of claim 5 wherein the plurality of slots of the vacuum means are evenly spaced throughout the length of the cleaning zone.

7. A method of cleaning fiber while the fiber travels along a processing path, said method characterized by the steps of:
moving the fiber to be cleaned through a designated cleaning zone; and
applying a vacuum pressure to the fiber to remove excess particles from the surface of the fiber as the fiber passes through the cleaning zone.

8. The method of claim 7 further comprising the step of applying a cleaning solution to the fiber as the fiber passes into the cleaning zone.

9. The method of claim 8 further comprising a step of additionally applying a vacuum pressure to the fiber to remove at least a portion of the loosest particles from the fiber prior to the application of a cleaning solution.

10. The method of claim 9, wherein the vacuum pressure of the cleaning zone is directed toward at least two different peripheral portions of the fiber.
